Europäisches Patentamt

(19) European Patent Office

Office européen des brevets

(11) Numéro de publication : **0 314 748 B1**

# FASCICULE DE BREVET EUROPEEN

(12)

(45) Date de publication du fascicule du brevet :
**10.07.91 Bulletin 91/28**

(51) Int. Cl.⁵ : **F25B 35/04,** F28F 1/42,
F28F 9/02, B01J 8/02

(21) Numéro de dépôt : **88904566.2**

(22) Date de dépôt : **20.05.88**

(86) Numéro de dépôt international :
**PCT/FR88/00257**

(87) Numéro de publication internationale :
**WO 88/09469 01.12.88 Gazette 88/26**

(54) REACTEUR ECHANGEUR DE CHALEUR.

(30) Priorité : **22.05.87 FR 8707211**

(43) Date de publication de la demande :
**10.05.89 Bulletin 89/19**

(45) Mention de la délivrance du brevet :
**10.07.91 Bulletin 91/28**

(84) Etats contractants désignés :
**AT BE CH DE FR GB IT LI LU NL SE**

(56) Documents cités :
**CH-A- 242 706
CH-A- 303 408
DE-C- 640 323
FR-A- 754 099
FR-A- 835 049
FR-A- 2 347 650
FR-A- 2 545 594**

(56) Documents cités :
**US-A- 1 829 370
US-A- 1 972 427
US-A- 2 019 356
US-A-38 285 66**

(73) Titulaire : **FAIVELEY S.A.**
**143 boulevard Anatole France Carrefour
Pleyel
F-93200 SAINT DENIS (FR)**

(72) Inventeur : **CROZAT, Georges**
**59, rue Jules-Pean
F-66000 Perpignan (FR)**
Inventeur : **MARTIN, Frédéric**
**18, rue Latérale
F-94000 Créteil (FR)**

(74) Mandataire : **Bouju, André**
**Cabinet André Bouju B.P. 6250
F-75818 Paris Cédex 17 (FR)**

## Description

La présente invention concerne un réacteur échangeur de chaleur pouvant être utilisé notamment pour réaliser des réactions de synthèse ou de décomposition entre un solide et un gaz.

Dans l'industrie chimique on utilise de nombreux systèmes comprenant des réacteurs. Ces systèmes sont conçus pour permettre au mieux les réactions de synthèse ou de décomposition précitées, sans trop se préoccuper des quantités de chaleur mises en jeu lors de ces réactions.

Dans certaines applications, notamment dans celles dans lesquelles les réacteurs font partie d'une installation pour produire du froid ou de la chaleur, il est utile de pouvoir récupérer et même d'optimiser les quantités de chaleur mises en jeu, ce qui revient à contrôler d'une part la quantité de chaleur échangée et d'autre part le niveau énergétique, c'est-à-dire la température. A cet effet, la technologie du réacteur doit être telle que les réactions chimiques se passent correctement et que les échanges de chaleur puissent être contrôlés à la fois en quantité et en niveau.

Ainsi, dans le réacteur répondant aux conditions précitées, il faut pouvoir introduire à l'intérieur de l'enceinte du réacteur renfermant la matière réactive un fluide caloporteur apportant à cette matière la quantité de chaleur nécessaire pour permettre la réaction et il faut également pouvoir dissiper la chaleur de réaction au moyen d'un autre fluide.

On connaît d'après le FR-A-754 099, un réacteur échangeur de chaleur comprenant une enceinte cylindrique en métal, destinée à recevoir une substance chimique, cette enceinte étant traversée axialement par un tube métallique destiné à la circulation d'un fluide caloporteur, le tube comportant des ailettes radiales s'étendant sensiblement sur toute la hauteur de l'enceinte cylindrique et sur toute la distance radiale comprise entre le tube et la face latérale intérieure de l'enceinte cylindrique pour permettre un échange thermique entre le tube et l'intérieur de l'enceinte cylindrique. Ce réacteur est destiné à contenir une substance chimique solide susceptible de réagir avec un fluide, et l'une des extrémités de l'enceinte cylindrique comporte une tubulure permettant d'amener ledit fluide à l'intérieur de l'enceinte.

Le but de la présente invention est de créer un réacteur échangeur de chaleur du type précité de structure simple et facile à réaliser qui permette d'atteindre les objectifs précités.

Suivant l'invention, le réacteur échangeur de chaleur du type précité est caractérisé en ce qu'entre l'un des flasques d'extrémité de l'enceinte cylindrique et l'extrémité adjacente des ailettes du tube est disposé un corps creux de forme torique centré sur l'axe du tube, la tubulure d'amenée du fluide débouchant dans ledit corps creux et ce dernier comportant une série d'ouvertures régulièrement réparties autour du tube et disposées en regard de chacun des compartiments délimités par les ailettes du tube, en ce que la face latérale extérieure de l'enceinte cylindrique comporte des ailettes radiales, et en ce que l'ensemble constitué par l'enceinte cylindrique et le tube comportant des ailettes est d'une seule pièce.

Les ailettes radiales du tube dans lequel circule un fluide caloporteur divisent ainsi l'intérieur de l'enceinte cylindrique en une série de compartiments contenant une substance chimique réactive.

Le fluide caloporteur circulant dans le tube échange sa chaleur avec la substance chimique par l'intermédiaire des ailettes de ce tube. Compte tenu de la disposition radiale de ces ailettes et de leur répartition au sein de la substance chimique, celles-ci réalisent une surface d'échange thermique optimale entre le fluide caloporteur et cette substance chimique.

Le fait que la face latérale extérieure de l'enceinte cylindrique comporte des ailettes radiales permet de dissiper vers l'extérieur la chaleur de la réaction exothermique de synthèse entre la substance chimique et un fluide amené à l'intérieur du réacteur, lorsque celui-ci est utilisé dans un système mettant en jeu des réactions de synthèse et de décomposition alternées dans le temps, comme décrit par exemple dans le brevet français n° 2 615 601 de la Demanderesse du 22 Mai 1987 intitulé "Procédé pour produire du froid par réaction solide-gaz et dispositif s'y rapportant".

Par ailleurs, le fait que l'ensemble constitué par l'enceinte cylindrique et le tube comportant les ailettes soit d'une seule pièce pouvant par exemple être réalisé par extrusion permet d'obtenir à l'aide d'une seule opération de fabrication un réacteur à la fois efficace et peu coûteux. Le profilé obtenu par extrusion peut être coupé en éléments de longueurs variables suivant la capacité désirée des réacteurs que l'on veut obtenir.

Enfin, le corps creux de forme torique centré sur l'axe du tube, qui comporte une série d'ouvertures régulièrement réparties autour du tube et disposées en regard de chacun des compartiments délimités par les ailettes du tube, permet de répartir de façon très homogène à l'intérieur desdits compartiments le fluide destiné à réagir avec la substance chimique solide contenue dans ceux-ci.

Le réacteur échangeur de chaleur de l'invention permet donc d'optimiser par sa structure, les quantités de chaleur et les températures mises en jeu, et donc le fonctionnement du processus qui s'y déroule.

D'autres particularités et avantages de l'invention apparaîtront encore dans la description ci-après.

Aux dessins annexés donnés à titre d'exemples non limitatifs :

   – la figure 1 est une vue en coupe longitudinale d'un réacteur échangeur conforme à l'invention,
   – la figure 2 est une vue en coupe suivant le plan II-II de la figure 1,

– la figure 3 est une vue en élévation du corps creux toroïdal de collecte et de distribution du fluide réactif,

– la figure 4 est une vue en plan du corps creux toroïdal précité.

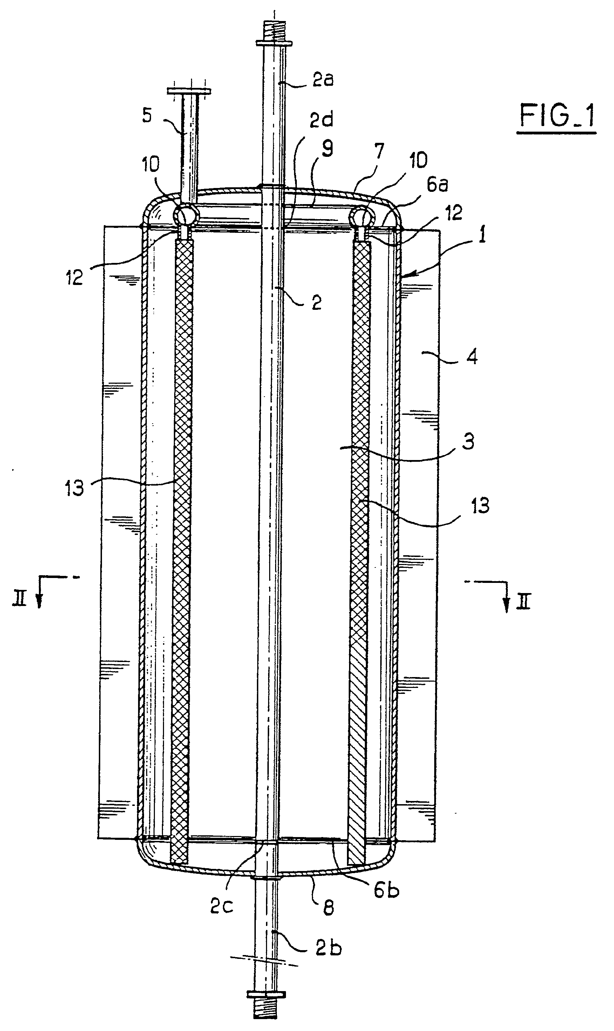

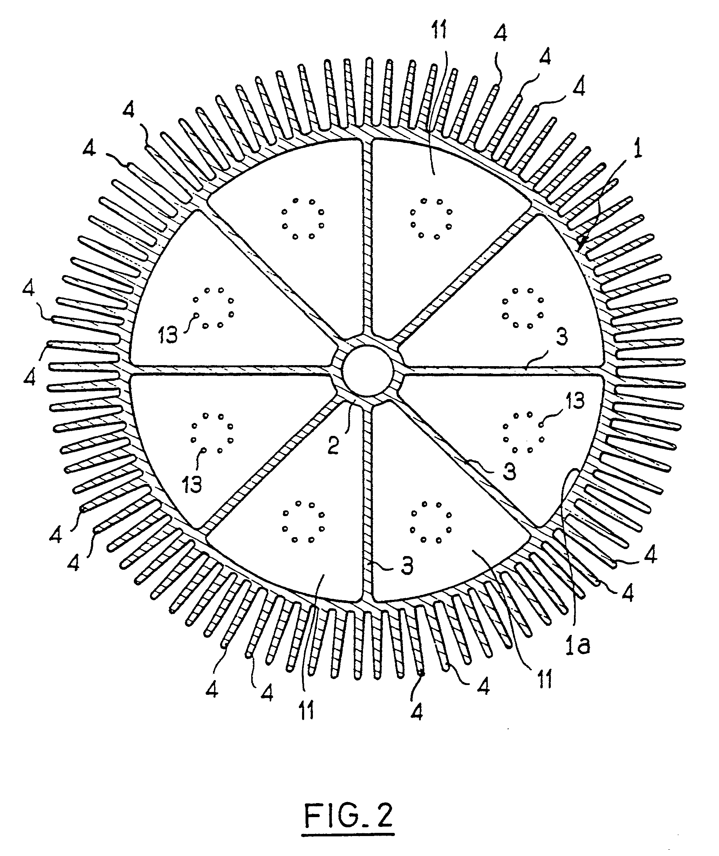

Dans la réalisation des figures 1 et 2, le réacteur échangeur de chaleur comprend essentiellement une enceinte cylindrique 1 en métal, destinée à recevoir une substance chimique, cette enceinte étant traversée axialement par un tube 2 métallique destiné à la circulation d'un fluide caloporteur.

Conformément à l'invention, le tube 2 comporte (voir figure 2) des ailettes radiales 3 s'étendant sensiblement sur toute la hauteur de l'enceinte cylindrique 1 et sur toute la distance radiale comprise entre le tube 2 et la face latérale intérieure 1a de l'enceinte cylindrique 1.

On voit d'autre part sur la figure 2 que la face latérale extérieure de l'enceinte cylindrique 1 comporte des ailettes radiales 4 qui permettent de dissiper la chaleur de l'intérieur de cette enceinte vers l'extérieur comme on le verra plus en détail plus loin.

L'ensemble constitué par l'enceinte cylindrique 1 et le tube 2 comportant des ailettes 3 est d'une seule pièce et est réalisé par extrusion.

L'ensemble constitué par l'enceinte cylindrique et le tube 2 à ailettes 3 est de préférence en aluminium ou en alliage à base d'aluminium. Ceux-ci se prêtent bien à l'extrusion et présentent une conductibilité thermique optimale.

Le réacteur ci-dessus est destiné à contenir une substance chimique solide telle qu'un chlorure métallique susceptible de réagir avec un fluide tel que de l'ammoniac

L'enceinte cylindrique 1 comporte à cet effet une tubulure 5 permettant d'amener le fluide à l'intérieur de l'enceinte.

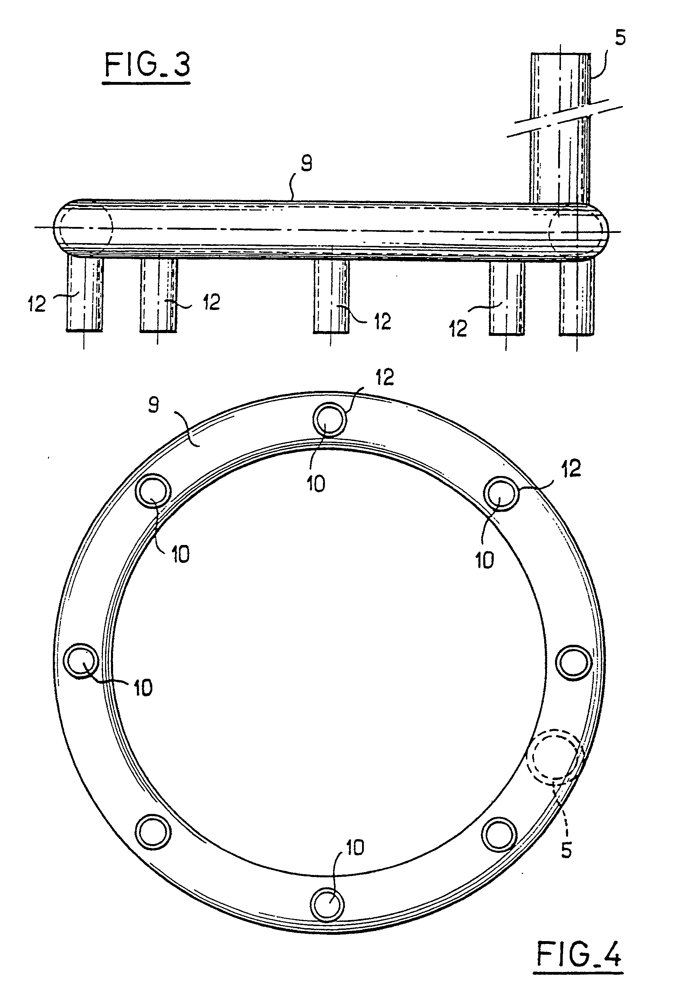

Dans la réalisation représentée, les extrémités opposées 6a, 6b de l'enceinte cylindrique 1 sont fermées par des flasques 7, 8 soudées auxdites extrémités. Entre l'une 7 des flasques d'extrémité de l'enceinte cylindrique 1 et l'extrémité adjacente des ailettes 3 du tube 2 est disposé un corps creux toroïdal 9 centré sur l'axe du tube 2. La tubulure 5 d'amenée du fluide débouche dans ce corps creux 9 et ce dernier comporte une série d'ouvertures 10 (voir également les figures 3 et 4) régulièrement réparties autour du tube 2 et disposées en regard de chacun des compartiments 11 délimités par les ailettes 3 du tube 2.

Les ouvertures 10 du corps creux 9 sont munies d'éléments tubulaires 12 qui sont eux-mêmes prolongés par des éléments tubulaires 13 (voir figure 1) perméables au fluide qui s'étendent jusqu'à l'extrémité de l'enceinte cylindrique 1 opposée au corps creux 9.

Dans l'exemple représenté, les éléments tubulaires 13 sont constitués par des manchons en grillage métallique, les mailles de celui-ci étant suffisamment serrées pour empêcher le passage du produit solide à l'intérieur de ces manchons. Le tube 2 à ailettes 3 ainsi que la tubulure 5 d'amenée du fluide sont soudés aux flasques d'extrémités 7 et 8. Le tube 2 à ailettes 3 est prolongé à l'extérieur de l'enceinte cylindrique 1 par deux éléments de tube 2a, 2b qui sont soudés au tube central 2 en 2c, 2d c'est-à-dire au niveau des extrémités 6a, 6b des ailettes 3 situées à l'intérieur de l'enceinte 1.

Le fonctionnement du réacteur que l'on vient de décrire est le suivant.

On fait circuler à l'intérieur du tube 2 au moyen d'une pompe extérieure non représentée, un fluide caloporteur tel qu'une huile thermale.

On fait circuler de l'air, par exemple au moyen d'un motoventilateur extérieur, vers les ailettes 4 situées sur la face extérieurs de l'enceinte 1.

On introduit par la tubulure 5 un fluide tel qu'un gaz pouvant réagir physiquement ou chimiquement avec une substance chimique solide contenue à l'intérieur de l'enceinte 1.

Le fluide caloporteur circulant dans le tube 2 à ailettes 3 permet de chauffer à coeur le solide contenu dans l'enceinte 1 et d'engendrer ainsi une décomposition du composé obtenu par réaction entre le solide et le gaz introduit par la tubulure 5. Le gaz ainsi formé s'échappe de l'enceinte 1 par la tubulure 5.

Dans une seconde étape du fonctionnement, la circulation du fluide caloporteur dans le tube 2 à ailettes est arrêtée. Par contre, l'air est soufflé contre les ailettes extérieures 4 de l'enceinte ce qui permet d'évacuer la chaleur engendrée lors de la réaction de synthèse entre le solide et le gaz à l'intérieur de l'enceinte 1.

Bien entendu, l'invention n'est pas limitée à l'exemple de réalisation que l'on vient de décrire.

Ainsi, les flasques d'extrémité 7 et 8 pourraient être vissés sur les extrémités de l'enceinte 1.

## Revendications

1. Réacteur échangeur de chaleur comprenant une enceinte cylindrique (1) en métal, destinée à recevoir une substance chimique, cette enceinte (1) étant traversée axialement par un tube métallique (2) destiné à la circulation d'un fluide caloporteur, le tube (2) comportant des ailettes radiales (3) s'étendant sensiblement sur toute la hauteur de l'enceinte cylindrique (1) et sur toute la distance radiale comprise entre le tube (2) et la face latérale intérieure de l'enceinte cylindrique (1) pour permettre un échange thermique entre le tube (2) et l'intérieur de l'enceinte cylindrique (1), ce réacteur étant destiné à contenir une substance chimique solide susceptible de réagir avec un fluide, et l'une (6a) des extrémités de l'enceinte cylindrique (1) comportant une tubulure (5) permettant d'amener ledit fluide à l'intérieur de l'enceinte (1), caractérisé en ce qu'entre l'un (7) des flasques d'extrémité de l'enceinte cylindrique (1) et l'extrémité adjacente (6a) des ailettes (3) du tube (2) est disposé un corps creux (9) de forme torique centré sur l'axe du tube (2), la tubulure (5) d'amenée du fluide débouchant dans ledit corps creux (9) et ce dernier comportant une série d'ouvertures (10) régulièrement réparties autour du tube (2) et disposées en regard de chacun des compartiments (11) délimités par les ailettes (3) du tube (2), en ce que la face latérale extérieure de l'enceinte cylindrique (1) comporte des ailettes radiales (4), et en ce que l'ensemble constitué par l'enceinte cylindrique (1) et le tube (2) comportant des ailettes (3) est d'une seule pièce.

2. Réacteur échangeur conforme à la revendication 1, caractérisé en ce que l'ensemble constitué par l'enceinte cylindrique (1) et le tube (2) à ailettes (3) est en aluminium ou en alliage à base d'aluminium, l'ensemble étant réalisé par extrusion.

3. Réacteur échangeur conforme à l'une des revendications 1 ou 2, caractérisé en ce que les extrémités opposées (6a, 6b) de l'enceinte cylindrique (1) sont fermées par des flasques (7, 8) soudés auxdites extrémités.

4. Réacteur conforme à l'une des revendications 1 à 3, caractérisé en ce que les ouvertures (10) du corps creux (9) sont prolongées par des éléments tubulaires (13) perméables au fluide qui s'étendent jusqu'à l'extrémité de l'enceinte cylindrique (1) opposée audit corps creux (9).

5. Réacteur conforme à la revendication 4, caractérisé en ce que les éléments tubulaires (13) sont constitués par des manchons en grillage métallique, les mailles de celui-ci étant suffisamment serrées pour empêcher le passage du produit solide à l'intérieur de ces manchons.

## Claims

1. A heat-exchanger reactor comprising a cylindrical metal containment (1) intended for receiving a chemical substance, this containment (1) having passing axially through it a metal tube (2) intended for the circulation of a heat-exchange fluid, the tube (2) possessing radial fins (3) extending substantially over the entire height of the cylindrical containment (1) and over the entire radial distance between the tube (2) and the inner lateral face of the cylindrical containment (1) to allow a heat exchange between the tube (2) and the interior of the cylindrical containment (1), this reactor being intended for containing a solid chemical substance capable of reacting with a fluid, one (6a) of the ends of the cylindrical containment (1) possessing a pipeline (5) making it possible to convey the said fluid into the containment (1), characterized in that between one (7) of the end flanges of the cylindrical containment (1) and the adjacent end (6a) of the fins (3) of the tube (2) is arranged a toroidal hollow body (9) centered on the axis of the tube (2), the fluid delivery pipeline (5) opening into the said hollow body (9), and the latter possessing a series of orifices (10) uniformly distributed round the tube (2) and arranged opposite each of the compartments (11) delimited by the fins (3) of the tube (2), in that the outer lateral face of the cylindrical containment (1) possesses radial fins (4), and in that the assembly composed of the cylindrical containment (1) and of the tube (2) possessing fins (3) is in one piece.

2. An exchanger reactor as claimed in claim 1, characterized in that the assembly composed of the cylindrical containment (1) and of the tube (2) with fins (3) is made of aluminium or an aluminium-based alloy, the assembly being produced by extrusion.

3. An exchanger reactor as claimed in one of claims 1 or 2, characterized in that the opposite ends (6a, 6b) of the cylindrical containment (1) are closed by means of flanges (7, 8) welded to the said ends.

4. An exchanger reactor as claimed in one of claims 1 to 3, characterized in that the orifices (10) in the hollow body (9) are extended by tubular elements (13) permeable to the fluid and extending as far as that end of the cylindrical containment (1) opposite the said hollow body (9).

5. A reactor as claimed in claim 4, characterized in that the tubular elements (13) are composed of sleeves made of metal netting, the meshes of this being sufficiently close to prevent the solid product from passing into the sleeves.

## Ansprüche

1. Wärmeaustauschreaktor, mit einem zylindrischen Behälter (1) aus Metall, der dazu bestimmt ist, eine chemische Substanz aufzunehmen, und der in axialer Richtung von einem metallischen Rohr (2) durchsetzt wird, das für die Zirkulation eines Wärmeübertragungsfluids vorgesehen ist und radiale Flügel (3) aufweist, die sich im wesentlichen über die gesamte Höhe des zylindrischen Behälters (1) und über den gesamten radialen Abstand zwischen dem Rohr (2) und der inneren Seitenfläche des zylindrischen Behälters (1) erstrecken, um einen Wärmeaustausch zwischen dem Rohr (2) und dem Inneren des zylindrischen Behälters (1) zu ermöglichen, wobei der Reaktor dazu vorgesehen ist, eine feste chemische Substanz aufzunehmen, die mit einem Fluid reagieren kann, und wobei eines (6a) der Enden des zylindrischen Behälters (1) einen Rohrstutzen (5) aufweist, der die Zuführung des Fluids in das Innere des Behälters (1) ermöglicht, dadurch gekennzeichnet, daß zwischen einer (7) der Endabdeckungen des zylindrischen Behälters (1) und dem angrenzenden Ende (6a) der Flügel (3) des Rohrs (2) ein torischer Hohlkörper (9) angeordnet ist, der auf der Mittellinie des Rohrs (2) zentriert ist, wobei der Rohrstutzen (5) zum Zuführen des Fluids in den Hohlkörper (9) mündet und wobei dieser letztere eine Reihe von um das Rohr (2) regelmäßig verteilten Öffnungen (10) aufweist, die jeweils gegenüber den durch die Flügel (3) des Rohrs begrenzten Abteilungen angeordnet sind, daß die äußere Seitenfläche des zylindrischen Behälters (1) radiale Flügel (4) aufweist und daß der durch den zylindrischen Behälter (1) und das die Flügel (3) aufweisende Rohr (2) gebildete Gesamtaufbau aus einem einzigen Stück besteht.

2. Austauschreaktor gemäß Anspruch 1, dadurch gekennzeichnet, daß der durch den zylindrischen Behälter (1) und das Rohr (2) mit Flügeln (3) gebildete Gesamtaufbau aus Aluminium oder aus einer Legierung auf Aluminiumbasis besteht, wobei der Gesamtaufbau durch Extrudieren hergestellt wird.

3. Austauschreaktor gemäß einem der Ansprüche 1 oder 2, dadurch gekennzeichnet, daß die gegenüberliegenden Enden (6a, 6b) des zylindrischen Behälters (1) durch Abdeckungen (7, 8) verschlossen sind, die auf die Enden aufgeschweißt sind.

4. Reaktor gemäß einem der Ansprüche 1 bis 3, dadurch gekennzeichnet, daß die Öffnungen (10) des Hohlkörpers (9) durch fluiddurchlässige röhrenförmige Elemente (13) verlängert werden, die sich bis zu dem vom Hohlkörper (9) abgewandten Ende des zylindrischen Behälters (1) erstrecken.

5. Reaktor gemäß Anspruch 4, dadurch gekennzeichnet, daß die röhrenförmige Elemente (13) durch Stutzen aus Metallgitter gebildet werden, wobei deren Maschen ausreichend dicht verlaufen, um den Durchgang des Festkörperprodukts in das Innere dieser Stutzen zu verhindern.

FIG_1

FIG. 2

FIG.3

9

5

12    12    12    12

9    12

10

12

10    10

10

10

5

10

FIG.4